# EUROPÄISCHE PATENTSCHRIFT

(11) **EP 2 189 549 B1**
(45) Veröffentlichungstag und Bekanntmachung des Hinweises auf die Patenterteilung: **04.05.2011**
(21) Anmeldenummer: 09009141.4
(22) Anmeldetag: 14.07.2009
(51) Int. Cl.: C22C 37/04, F16F 15/26, F16H 55/06, F16H 55/17

(54) **Zahnrad und Ausgleichswelle für einen Hubkolbenmotor**
Gear wheel and balancing shaft for a displacement engine
Roue dentée et arbre d'équilibrage pour un moteur à pistons alternatifs

(30) Priorität: 19.11.2008 DE 102008057947
(43) Veröffentlichungstag der Anmeldung: 26.05.2010
(73) Patentinhaber: MITEC Automotive AG, 99817 Einsenach (DE)
(72) Erfinder: Nagler, Roland, 99817 Eisenach (DE); Trieschmann, Jörg, 36266 Heringen (DE)
(74) Vertreter: Petirsch, Markus

(56) Entgegenhaltungen:
- EP-A- 0 076 358
- EP-A- 0 453 723
- DE-A1- 3 929 804
- DE-A1-102006 029 554
- US-A1- 2007 261 657
- US-B1- 6 258 180

## Beschreibung

Die vorliegende Erfindung betrifft eine Ausgleichswelle mit einem Zahnrad für einen Hubkolbenmotor, mit einer Lagerstelle, einem Zahnradabschnitt und einem Unwuchtabschnitt, entsprechend dem Oberbegriff des Anspruchs 1 und wie sie aus dem DE 102006029554A bekannt ist.

In modernen Hubkolbenmotoren werden Ausgleichswellen eingesetzt, um entstehende Schwingungen und Unwuchten des Motors zu kompensieren. Die in Einzylinder-Hubkolbenmotoren oder in Mehrzylinder-Hubkolbenmotoren auftretenden freien Massenkräfte und freien Massen-Momente, werden durch die Ausgleichswellen reduziert oder kompensiert.

Gebräuchlich ist es, diese Ausgleichswellen als Schmiedeteile auszuführen. Die Schmiedeteile sind Halbzeuge, an die Zahnräder zum Antreiben der Ausgleichswelle angeschmiedet werden, so dass sie mit den Ausgleichswellen verbunden sind. Alternativ können die Zahnräder auch über Presssitze oder andere Welle-Nabe-Verbindungen verdrehsicher mit der Ausgleichswelle verbunden werden. Das Gleiche gilt für Unwuchtmassen an den Ausgleichswellen. Auch diese können entweder angeschmiedet oder über Presssitze befestigt sein. In manchen Ausführungen werden die Unwuchtmassen auch mittels Maschinenelementen befestigt. Es ist auch bekannt, die Unwuchtmassen an die Ausgleichswellen anzuschweißen.

Im Stand der Technik werden die Lagerstelle und die Verzahnungen, also die Zahnräder der Welle, gehärtet. In einigen Fällen wird auch die komplette Welle einsatzgehärtet, nitriert oder nitrocarburiert. In der Mehrzahl der Fälle wird die Wärmebehandlung jedoch als Induktionshärten ausgeführt. Die Zahnräder der Ausgleichswelle sind bei geschmiedeten Ausgleichswellen in jedem Fall gehärtet.

Es sind auch Ausgleichswellen aus Gusseisen bekannt, bei denen Zahnräder aus Stahl aufgeschrumpft werden. Die Lagerstellen dieser Ausführung werden wahlweise induktiv gehärtet. Die Zahnräder aus Stahl sind meist einsatzgehärtet, in einigen Fällen wird die Verzahnung induktiv gehärtet.

Des weiteren wird in zunehmenden Maße zwecks innermotorischer Reibleistungsreduzierung die heute vorwiegend praktizierte Lagerung der Ausgleichswellen in Gleitlagern durch eine Wälzlagerung entweder komplett oder teilweise ersetzt. Die Wälzlagerung der Ausgleichswellen wird dabei sowohl in Ausgleichswellengehäusen als auch direkt im Zylinderkurbelgehäuse realisiert.

Aus obengenanten Gründen ergibt sich die Aufgabe, eine verbesserte Ausgleichswelle vorzuschlagen, die kostengünstig und die insbesondere in Kombination mit Wälzlagern für den Einsatz in Hubkolbenmotoren geeignet ist.

Gelöst wird die vorliegende Aufgabe durch eine Ausgleichswelle für einen Hubkolbenmotor mit den Merkmalen des Anspruchs 1.

Die erfindungsgemäße Ausgleichswelle für eine Hubkolbenmotor hat ein Zahnrad aus Gusseisen mit Kugelgraphit und weist mindestens eine Lagerstelle auf an der die Ausgleichswelle gelagert ist. An mindestens einem Zahnradabschnitt der Welle ist das Zahnrad verdrehsicher mit der Ausgleichswelle verbunden. An mindestens einem Unwuchtabschnitt ist eine Unwucht angeordnet.

Im Gegensatz zu den bisher bekannten Ausgleichswellen, bei denen Zahnräder aus Einsatz- oder Vergütungsstahl mit der jeweiligen adäquaten Wärmebehandlung Verwendung finden, wird erfindungsgemäß ein Zahnrad aus Gusseisen mit Kugelgraphit mit den Merkmalen des Anspruchs 17 verwendet. Erfindungsgemäß besitzt das Gusseisen eine Werkstoffspezifikation mit chemischen Bestandteilen sowie Gefügeausbildung nach einem der Ansprüchen 9 bis 13, die weiter unten genauer spezifiziert wird. Besonders bevorzugt wird ein Zahnrad ohne induktive Härtung der Verzahnung verwendet.

Im Einsatz wirkt das Zahnrad der Ausgleichswelle mit einem Zahnrad an der Kurbelwelle oder mit zwischen Ausgleichswelle und Kurbelwelle angeordneten Zwischenzahnrädern zusammen. Zwar werden Ausgleichswellen in Verbrennungsmotoren meist lastlos betrieben, auch wenn in einigen Fällen eine Ölpumpe oder auch eine Wasserpumpe angetrieben wird; dennoch entstehen kurzzeitige Drehmomente und Kräfte von erheblicher Größenordnung, die auf die Ausgleichswelle einwirken. Die Drehungleichförmigkeit der Verbrennungsmotoren ruft gemeinsam mit der den Ausgleichswellen eigenen Massenträgheit diese Drehmomente hervor. Es kommt zeitweise zu, Belastungsspitzen, die insbesondere auf das Zahnrad der Ausgleichswelle wirken und teilweise sehr hoch sind.

In einer bevorzugten Ausführungsform ist das Zahnrad aus Gusseisen mit Kugelgraphit über Presssitz oder über andere Welle-Nabe-Verbindungen, die dem Fachmann bekannt sind, an der Ausgleichswelle befestigt. Die Ausgleichswelle und das Zahnrad sind folglich zwei eigenständige Elemente, die während des Herstellungsprozesses zusammengefügt werden. Folglich kann die Ausgleichswelle aus einem anderen Material bestehen als das Zahnrad.

Im Rahmen der Erfindung wird unter Presssitz eine mechanische Verbindungstechnik verstanden, bei der nach dem Zusammenfügen eine Presspassung entsteht und Längs- und Querkräfte kraftschlüssig übertragen werden. Unter Welle-Nabe-Verbindung wird eine Verbindungsart verstanden, bei der Drehmomente und Leistungen auf eine Nabe übertragen werden, aber auch Axialkräfte, Querkräfte und Biegemomente, wie sie durch Schrägverzahnungen von Zahnrädern hervorgerufen werden.

Bevorzugt ist die Ausgleichswelle aus Stahl oder aus einem Wälzlagerstahl mit einem hohen Kohlenstoffanteil, beispielsweise mindestens 0,5 %, hergestellt. Eine derartige Ausgleichswelle ist bevorzugt über eine Gleitlagerung, besonders bevorzugt über eine Wälzlagerung gelagert. Die Lagerstellen können bei einer Lagerung in einem Wälzlager induktiv gehärtet sein. Bei Verwendung von Wälzlagern, deren Wälzkörper direkt auf den Ausgleichswellenlagerzapfen (Lagerstellen) laufen, ist der Einsatz von Stahl als Wellenwerkstoff mit induktiv gehärteter Laufbahn daher unabdingbar. Die Laufbahn ist die Außenfläche oder Mantelfläche der Welle, die mit den Wälzkörpern des Wälzlagers Kontakt hat. Die Verwendung von Gusseisen mit Kugelgraphit als Wellenwerkstoff, auch mit induktiv gehärteter Laufbahn, ist in diesem Fall nicht dauerhaltbar.

Vorteilhafterweise ist die Unwucht an dem Unwuchtabschnitt der Ausgleichswelle mittels einer bekannten Verbindungstechnik über Formschluss oder alternativ kraftschlüssig montiert. Bevorzugt ist die Unwucht einstückig an der Welle angeformt.

In einer bevorzugten Ausführungsform sind die Ausgleichswelle und das Zahnrad aus dem gleichen Material hergestellt. Sie bestehen beide aus Gusseisen mit Kugelgraphit. Die Materialeigenschaften können für beide Elemente die unten genannten bevorzugten Spezifikationen aufweisen.

Bevorzugt ist die Lagerstelle der Ausgleichswelle aus Kugelgraphitgusseisen ungehärtet ausgeführt. Besonders bevorzugt ist die gesamte Ausgleichswelle ungehärtet.

In einer bevorzugten Ausführungsform sind die Ausgleichswelle und das Zahnrad einstückig ausgebildet. Beide sind aus Gusseisen hergestellt. Das Zahnrad wird bei der Herstellung (Urformung) der einstückigen Ausgleichswelle direkt mit angegossen. Nachträgliche Arbeitsschritte, wie ein Anschweißen oder Aufschrumpfen von Zahnrädern entfallen. Weiterhin entfällt die präzise Bearbeitung an den Fügestellen der einzelnen Bauteile bei der einstückigen (einteiligen) Ausführungsform der Ausgleichswelle mit Zahnrad. Im Rahmen der Erfindung wurde festgestellt, dass diese Ausgleichswelle in vergleichsweise wenigen Arbeitsschritten hergestellt werden kann. Gleichzeitig ist es möglich, eine sehr hohe Präzision der Welle zu erzielen, insbesondere der funktionswichtigen Teilbereiche, die das Zahnrad einschließen. Somit entstehen für die Urformung nur geringe Kosten. Gleichzeitig wurde erkannt, dass eine derartige Ausgleichswelle eine hohe Tragfähigkeit aufweist, die sie für den Einsatz in Hubkolbenmotoren besonders geeignet macht.

In einer bevorzugten Ausführungsform ist das Zahnrad im Zahnradabschnitt der Ausgleichswelle ungehärtet. Damit entfällt auch der Härtevorgang bei der Herstellung, was das Zahnrad und somit die Ausgleichswelle insgesamt sehr kostengünstig macht.

Im Rahmen der Erfindung wurde festgestellt, dass die Funktion und Dauerhaltbarkeit der Zahnräder und/oder der Ausgleichswelle beim Einsatz von ungehärtetem Kugelgraphitguss stark von der Wahl des Grundgefüges abhängig ist. Auch wurde festgestellt, dass eine hohe Bruchdehnung und hohe Bruchzähigkeit sowie ein gutes Verschleißverhalten mit einer geeigneten Wahl der Komponenten des Gusseisens erzielt werden kann. Die Zahnräder mit einem geeigneten Gefüge halten den auftretenden Belastungen bzw. Belastungsspitzen auch dann Stand, wenn der Antrieb direkt von der Kurbelwelle erfolgt. Eine geeignete Zusammensetzung des Gusseisens weist einen Kohlenstoff-Anteil von 2,90 bis 3,80 Massen-% auf. Bevorzugt ist ein Kohlenstoff-Anteil von 3,20 bis 3,70 Massen-%, wobei ein Anteil von 3,35 bis 3,65 Massen-% Kohlenstoff als besonders bevorzugt einzustufen ist. Das geeignete Gefüge verfügt über einen Massenanteil von 1,5 bis 3,5 Massen-% an Silizium, bevorzugt von 2,2 bis 3,5 Massen-% und besonders bevorzugt von 2,5 bis 3,3 Massen-%. Der Silizium-Anteil kann zusätzlich oder unabhängig von dem Kohlenstoff-Anteil gewählt werden.

Es hat sich weiterhin als vorteilhaft erwiesen, wenn das verwendete Gusseisen einen Schwefel-Anteil aufweist, der höchstens 0,015 Massen-% beträgt. Bevorzugt liegt der Schwefel-Anteil unter 0,01 Massen-%. Der Anteil an Magnesium im Gusseisen sollte zwischen 0,025 bis 0,07 Massen-% liegen; bevorzugt ist ein Anteil zwischen 0,025 und 0,05 Massen-%. Der Kupfer-Anteil sollte größer als 0,5 Massen-% sein, vorzugsweise im Bereich zwischen 0,5 und 1,1 Massen-% liegen.

Um ein geeignetes Verschleißverhalten der Zahnräder und/oder der Ausgleichswelle zu erzeugen, ist ein bestimmtes Gefüge in dem Gusseisen mit Kugelgraphit herzustellen. Im Rahmen der Erfindung wurde erkannt, dass der Perlit-Anteil des Mikrogefüges mindestens 60 % ist. Der Ferrit-Anteil dieses Gefüges liegt bei höchstens 40 %. Um eine besonders hohe Verschleißfestigkeit zu erzielen, weist das Mikrogefüge des Gusseisens bevorzugt einen Perlit-Anteil von 80 - 90% auf und bevorzugt einen Ferrit-Anteil von 10 bis 20 %. Damit lassen sich Härtewerte der Zahnräder und/oder der Ausgleichswelle von 200 bis 300 HB einstellen. Vorzugsweise liegt die erzielbare Härte HB im Bereich von 240 bis 290 HB, bevorzugt in einem Abstand von mindestens 4 mm in senkrechter Richtung von der Mantelfläche des Bauteils (Randabstand ≥ 4 mm).

Unter dem Begriff "geeignetes Verschleißverhalten" wird dabei eine Werkstoffkonfiguration verstanden, deren Zugfestigkeit wenigstens 600 N/mm² beträgt, vorzugsweise mindestens 700 N/mm². Die so genannte Streckgrenze Rp_{0,2} beträgt mindestens 380 N/mm², bevorzugt mindestens 440 N/mm². Dabei liegt die Bruchdehnung bei mindestens 4 %, bevorzugt mindestens 8 % bis 10 %, jedoch jedenfalls bevorzugt nicht mehr als 12 %.

Als weiterer Einflussfaktor hat sich die Graphitausbildung und -verteilung innerhalb des Gusseisens gezeigt. Die Graphitteilchen sowie deren Verteilung in Form und Größe soll der Klasse VI/6 oder feiner der Norm EN ISO 945-1994 entsprechen. Bevorzugt ist das Gefüge des Gusseisens deshalb derart ausgeführt, dass die größte Abmessung der Graphitteilchen kleiner als 0,12 mm ist. Besonders bevorzugt ist die Abmessung kleiner als 0,08 mm. Die Eigenschaften der Zahnräder lassen sich nochmals verbessern, wenn die größte Abmessung der Kugelgraphitteilchen in dem Gusseisen höchstens 0,06 mm ist. Dabei ist eine möglichst gleichmäßige Verteilung bevorzugt. Derartige Gefügequalitäten sind besonders für die im Betrieb auftretenden hohen Gleitgeschwindigkeiten an der Verzahnung (Zahnrad) und an den Lagerstellen wichtig, insbesondere beim gleichzeitigen Auftreten von hohen Temperaturen und niedrigen Viskositätswerten der im Motor verwendeten Öle.

Das erfindungsgemäße Zahnrad und/oder die Ausgleichswelle zeichnet sich durch eine Bruchdehnung von mehr als 8 % aus. Diese angestrebte Bruchdehnung wird über gezielte chemische Zusammensetzung des Gusseisens erreicht. Bevorzugt ist dabei ein Mangan-Anteil von höchstens 0,5 Massen-% im Gusseisen vorhanden. Besonders bevorzugt liegt der Mangan-Anteil zwischen 0,15 und 0,3 Massen-%. Zusätzlich oder alternativ ist der Phosphor-Anteil im Gusseisen auf höchstens 0,05 Massen-% zu begrenzen. Bevorzugt ist ein Massenanteil von höchstens 0,03 Massen-%.

Die durch gezielte chemische Zusammensetzungen erreichten, gegenüber "normalem" (unlegiertem) Gusseisen erhöhten Bruch- und Dehnungswerte kommen insbesondere den vergleichsweise niedrigen Dauerhaltbarkeits-Kennzahlen zugute; dies sind beim Zahnrad die Zahnfußbiege-Wechselfestigkeit (S_{Fe}) sowie die Dauerwälzfestigkeit (s_{Htim}). Die während des Betriebes der Ausgleichswelle auftretenden stoßhaften Belastungen führen zu Verformungen an den Zähnen des Zahnrades, die sich im Wesentlichen aus der Biegeverformung des Zahnes und der Verformung aufgrund Hertzscher Abplattung der Zahnflanken zusammensetzen. Die hohen Bruchdehnungswerte des Werkstoffes, entsprechend einem der Ansprüche 9 bis 13, insbesondere in Verbindung mit der ungehärteten Ausführung der Verzahnung, entsprechend Anspruch 8, erlauben in besonderer Weise den Anforderungen bezüglich Biegeverformung der Zähne und der Hertzschen Abplattung der Zahnflanken gerecht zu werden. Diese Mechanismen führen unter der Annahme einer gleichbleibenden Zahnfußbiegewechsel- und Dauerwälzfestigkeit (nach Anhaltswerten aus der Literatur) zu einer höheren Übertragungsfähigkeit der Verzahnung.

Die mit dem oben beschriebenen Grundgefüge des Gusseisens einhergehenden mechanischen Eigenschaften erlauben bei geeigneter Auslegung der Verzahnung des Zahnrads auch einen Einsatz der Ausgleichswelle in Hochleistungs-OTTO-Motoren und DIESEL-Motoren, die zum Teil eine spezifische Leistung von beispielsweise 70kW/l (Kilowatt/Liter) aufweisen. Bevorzugt weist deshalb das Zahnrad der Ausgleichswelle eine Hochverzahnung auf. Darunter wird eine Ausbildung der einzelnen Zähne des Zahnrads derart verstanden, dass das Zahnprofil gegenüber einer Normalausführung deutlich erhöht ist. In der Regel liegt die Zahnprofilhöhe bei einem Fusshöhenfaktor (engl.: dedendum factor) größer 1,25 und einen Kopfhöhenfaktor (engl.: addendum factor) größer 1,0.

Neben einer Geradverzahnung des Zahnrads der Ausgleichswelle, bei der sich die Zahnflanken parallel zur Rotationsachse des Zahnrads erstrecken, hat sich insbesondere eine Schrägverzahnung als positiv erwiesen. Die Verzahnung weist einen vorgegebenen Winkel zur Rotationsachse des Zahnrades auf, der von Null Grad verschieden ist und bevorzugt zwischen 5° und 40° liegt. Die Schrägverzahnung des Zahnrads wirkt sich mit dem gleichmäßigeren Zahneingriffssteifigkeitsverlauf dämpfend auf die Ausgleichswelle aus, so dass auftretende Belastungsspitzen zusätzlich gedämpft werden.

Wesentlich bei der Erfindung ist, dass mindestens ein Zahnrad der Ausgleichswelle ungehärtet ist. Diese Ausführungsart steht in Widerspruch zu den bisher ausgebildeten Ausgleichswellen, bei denen sehr großer Wert auf Verschleißfestigkeit der Zahnräder beispielsweise durch Einsatz- oder Induktionshärtung gelegt wurde.

Der Begriff Zahnrad schließt im Zusammenhang mit dieser Erfindung auch das Kettenrad mit ein. Ein mit der Ausgleichswelle verbundenes ungehärtetes Kettenrad ist ebenfalls ein formschlüssig wirkendes Antriebselement, welches im Gegensatz zu einem "normalen" Zahnrad durch eine es umschlingende Kette angetrieben wird und nicht direkt in das antreibende Antriebselement eingreift. Kettentriebe (formschlüssige Hülltriebe) finden ebenfalls beim Antrieb von Ausgleichswellen in Hubkolbenmotoren Anwendung.

Ein erfindungsgemäßer Hubkolbenmotor hat eine Kurbelwelle und eine von der Kurbelwelle angetriebene Ausgleichswelle, die eine Lagerstelle hat, an der sie gelagert wird, und einen Zahnradabschnitt, an dem ein Zahnrad, beispielsweise über Presssitz oder andere Welle-Nabe-Verbindungen, verdrehsicher mit der Ausgleichswelle verbunden ist, aufweist. Die Ausgleichswelle hat einen Unwuchtabschnitt, der eine Unwucht trägt, die wahlweise einstückig an die Welle angeformt oder mittels einem oder mehreren Maschinenelementen verbunden ist. Das Zahnrad der Welle ist aus Gusseisen mit Kugelgraphit hergestellt. Die Welle selbst ist bevorzugt nicht aus Gusseisen mit Kugelgraphit hergestellt, sondern besteht aus Stahl und ist für die Lagerung in Wälzlagern geeignet. Die Ausgleichswelle kann im Falle einer Gleitlagerung wahlweise aus Stahl- oder Gusseisenwerkstoff bestehen und deren Lagerstellen können wahlweise gehärtet als auch ungehärtet ausgeführt sein. Wird die Ausgleichswelle in Wälzlagern gelagert und haben die Wälzkörper direkten Kontakt mit der Lageroberfläche, so muss die Welle in einem geeigneten Stahl ausgeführt und die Lagerstelle stets gehärtet werden. Das Zahnrad besteht immer aus Gusseisen mit Kugelgraphit und ist nicht gehärtet.

In einem erfindungsgemäßen Hubkolbenmotor mit den Merkmalen des Anspruchs 16 kann die Ausgleichswelle mit dem erfindungsgemäßen Zahnrad derart eingebaut sein, dass das Zahnrad in eine auf einer Kurbelwelle des Motors eingearbeitete Verzahnung oder in ein an einer Kurbelwelle angeordnetes Zahnrad eingreift. Das Zahnrad kann alternativ auch in ein Zahnrad einer zweiten Ausgleichswelle eingreifen oder mittels einer Kette mit einem Zahnrad der Kurbelwelle zusammenwirken.

Die Erfindung wird nachfolgend anhand von in den Figuren dargestellten bevorzugten Ausführungsformen näher erläutert. Die darin dargestellten Besonderheiten können einzeln oder in Kombination verwendet werden, um bevorzugte Ausgestaltungen der Erfindung zu schaffen. Die beschriebenen Ausführungsformen stellen keine Einschränkungen der Allgemeinheit des in den Ansprüchen definierten Gegenstandes dar. Es zeigen:
- Figur 1: eine erfindungsgemäße Ausgleichswelle;
- Figur 2: eine alternative Ausführungsform einer Ausgleichswelle;
- Figur 3: einen Ausgleichswellenantrieb mittels Räderkette
- Figur 4: einen Ausgleichswellenantrieb mittels zweier Zahnradpaare
- Figur 5: einen Ausgleichswellenantrieb mittels Kettentrieb
- Figur 6: einen Ausgleichswellenantrieb mittels Räderkette über Zwi- schenräder und Nebenaggregate-Antriebsräder
- Figur 7: eine erfindungsgemäße Ausgleichswelle in komplett gebauter Ausführung

Eine erfindungsgemäße Ausgleichswelle 1 aus Stahl, insbesondere aus Wälzlagerstahl mit einem Kohlenstoffanteil von mindestens 0,5%, schließt drei Lagerstellen 2, 3, 4, drei Unwuchtabschnitte 7, 8, 9 und einen Zahnradabschnitt 10 ein, in dem ein Zahnrad 5 angeordnet ist. Das Zahnrad 5 ist über Presssitz oder andere Welle-Naben-Verbindungen verdrehsicher mit der Ausgleichswelle 1 verbunden. Die Lagerstelle 4 und das Zahnrad 5 sind zur Verdeutlichung als Teilschnitt dargestellt.

Die Ausgleichswelle 1 wird an den drei Lagerstellen 2, 3, 4 in einem Lagergehäuse gelagert. Die axiale Positionierung der Ausgleichswelle 1 wird über das Lager 4 gewährleistet.

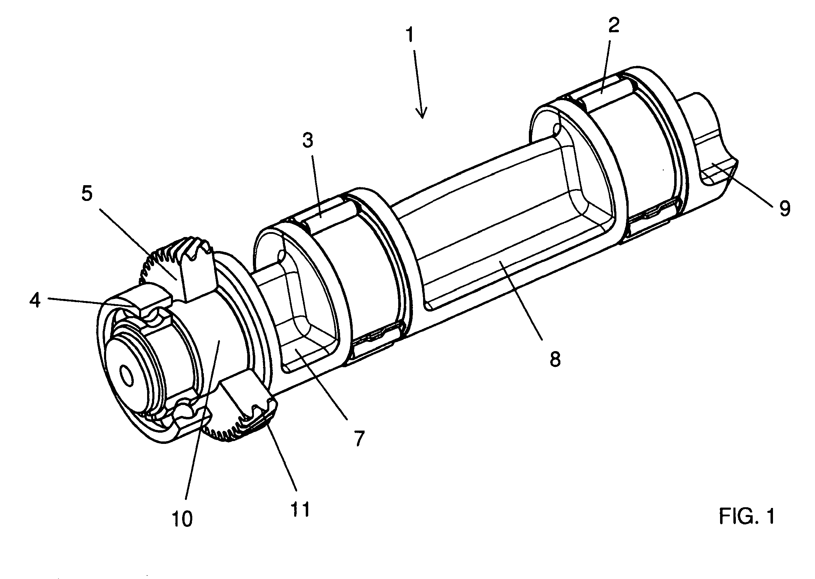

Figur 1 ist zu entnehmen, dass das über Presssitz verdrehsicher mit der Welle verbundene Zahnrad 5 eine Verzahnung 11 hat, die als Schrägverzahnung ausgebildet ist, d.h. die Flanken der einzelnen Zähne sind gegenüber der Rotationsachse der Ausgleichswelle 1 um einen vorbestimmten Winkel, vorzugsweise einem Winkel zwischen größer 0° bis 45°, geneigt.

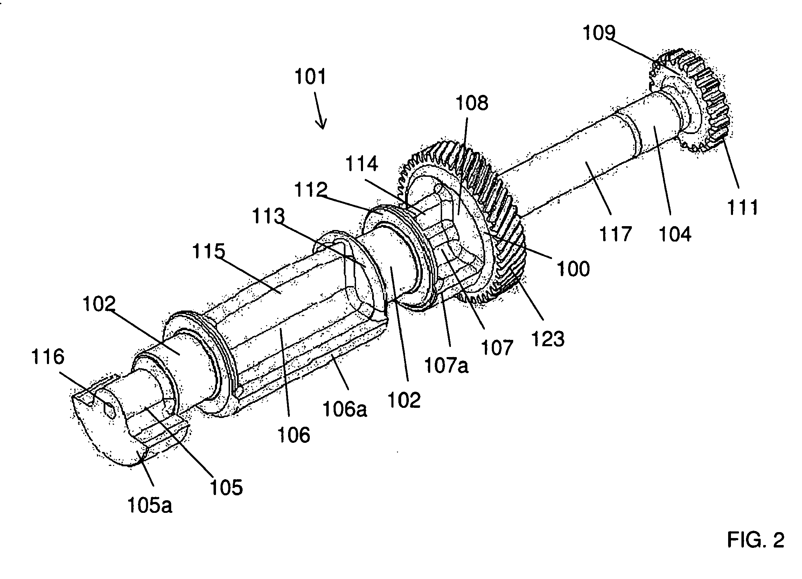

Eine alternative Ausführung einer Ausgleichswelle 101 aus Gusseisen mit Kugelgraphit ist in Figur 2 gezeigt, bei der das Zahnrad 110 einstückig mit der Welle 101 ist. Die einstückige Ausgleichswelle 101 schließt drei Lagerstellen 102, 103, 104, drei Unwuchtabschnitte 105, 106, 107 und zwei Zahnradabschnitte 108, 109 mit zwei einstückig angeformten Zahnrädern 110, 111 ein. Die Zahnräder 110, 111 bestehen ebenfalls aus Gusseisen und sind bevorzugt ungehärtet. Die Ausgleichswelle 101 und die Zahnräder 110, 111 haben bevorzugt die gleichen Materialeigenschaften und die gleiche Materialzusammensetzung. Die Ausgleichswelle 101 wird an den drei Lagerstellen 102, 103, 104 in einem Lagergehäuse gelagert. Die mittlere Lagerstelle 103 wird von zwei Schultern 112, 113 begrenzt. Die beiden Schultern 112, 113 an der Lagerstelle 103 gewährleisten die axiale Positionierung der Ausgleichswelle 101 und dienen als Axiallager.

Zwischen dem Zahnrad 110 und der zweiten Lagerstelle 103 sowie zwischen der zweiten Lagerstelle 103 und der hinteren Lagerstelle 102 weist die Ausgleichswelle 101 auf einer Seite jeweils eine Rippe 114, 115 auf. Die Unwuchtabschnitte 106, 107 mit jeweils einer Unwucht 106a, 107a sind den Rippen 114, 115 gegenüber angeordnet. Der hintere Unwuchtabschnitt 105 mit der Unwucht 105a schließt an die Lagerstelle 102 an und bildet mit der Zentrierbohrung 116 das eine Ende der Ausgleichswelle 101. Die Unwuchten 105a, 106a, 107a sind folglich im Bereich von ca. 180° der Ausgleichswelle 101 ausgebildet. In dem gezeigten Ausführungsbeispiel schließt an den Zahnradabschnitt 108 ein zylindrischer Wellenabschnitt 117 an. Dieser erstreckt sich bis zur vorderen, ersten Lagerstelle 104, an der ein weiterer Zahnradabschnitt 109 mit dem Zahnrad 111 (antreibendes Kettenrad) angeordnet ist und zugleich das andere Ende der Ausgleichswelle 101 bildet.

Bevorzugt besteht die hier dargestellte Ausgleichswelle 101 aus einem Gusseisen mit Kugelgraphit, wobei das Gusseisen bevorzugt die oben beschriebenen Materialeigenschaften aufweist.

Figur 2 ist zu entnehmen, dass das einstückig angeformte Zahnrad 108 der Ausgleichswelle 101 eine Verzahnung 122 hat, die als Schrägverzahnung 123 ausgebildet ist, d. h. die Flanken der einzelnen Zähne sind gegenüber der Rotationsachse der Ausgleichswelle 101 um einen vorbestimmten Winkel, vorzugsweise einem Winkel zwischen größer 0° bis 45° geneigt.

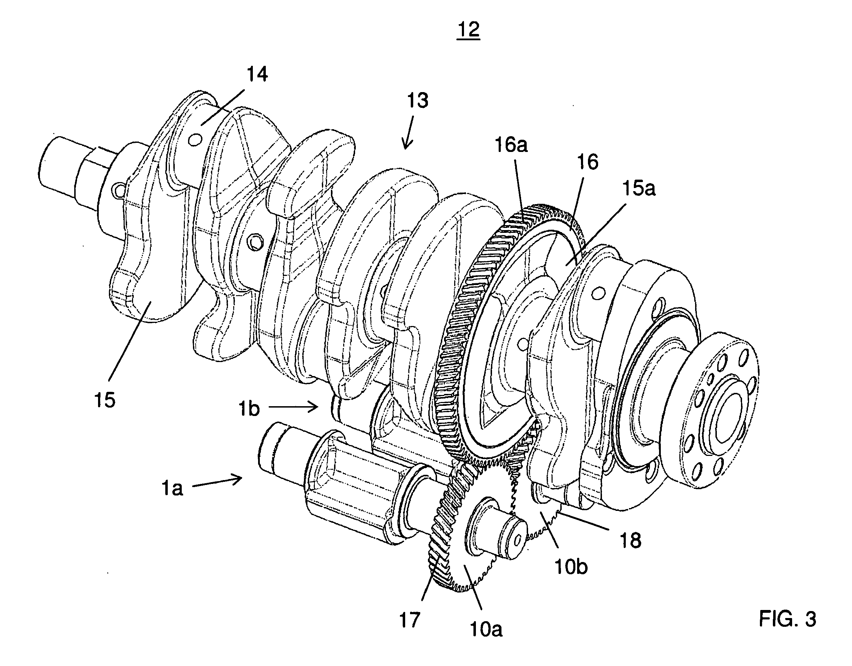

In der Figur 3 ist eine Wellenanordnung 12 gezeigt, die eine Kurbelwelle 13 eines Hubkolbenmotors (Vierzylinder-Reihenmotor) und zwei Ausgleichswellen 1 a, 1 b umfasst.

Die Kurbelwelle 13 hat mehrere Hubzapfen 14, welche zwischen den Kurbelwangen 15 angeordnet sind. Eine der Kurbelwangen 15 ist rotationssymmetrisch zur Kurbelwelle 13 angeordnet. Diese Kurbelwange 15a trägt ein Kurbelwellenzahnrad 16, das mit dem Zahnrad 10a der Ausgleichswelle 1a in Eingriff steht. Die Verzahnung 16a des Kurbelwellenzahnrades 16 ist ebenfalls eine Schrägverzahnung die mit der Schrägverzahnung 17 des Zahnrades 10a der Ausgleichswelle 1 a in Eingriff steht.

Das Zahnrad 10a der Ausgleichswelle 1a greift direkt in das Kurbelwellenzahnrad 16 der Kurbelwelle 13 ein. Das Kurbelwellenzahnrad 16 besteht in der Regel aus induktiv gehärtetem Vergütungsstahl oder einsatzgehärtetem Einsatzstahl. Die Zahnräder 10a und 10b sind über Presssitz oder andere Welle-Nabe-Verbindungen verdrehsicher mit der Ausgleichswelle 1a, 1b verbunden. Der Werkstoff der Zahnräder 10a, 10b ist Gusseisen mit Kugelgraphit. Der verwendete Werkstoff muss auf Grund seiner Eigenschaften den Erfordernissen bezüglich Biegeverformung der Zähne und Hertzscher Abplattung der Zahnflanken gerecht werden, welche durch die auftretenden Belastungsspitzen infolge der Drehungleichförmigkeit der Kurbelwelle 13 im Zusammenhang mit den Massenträgheiten der Ausgleichswellen 1a, 1b auftreten. Auf diese Weise werden die Drehmomentspitzen gedämpft und somit eine Beschädigung des Zahnrades 10a der Ausgleichswelle 1a und des Kurbelwellenzahnrads 16 zuverlässig verhindert. Die Ausgleichswelle 1a kann ebenfalls aus Gusseisen oder aus Stahl bestehen.

Da das Zahnrad 10a der Ausgleichswelle 1a in das Kurbelwellenzahnrad 16 eingreift, wird die Ausgleichswelle 1a als treibende Ausgleichswelle bezeichnet. Gleichzeitig steht in dieser Anordnung das Zahnrad 10a der ersten Ausgleichswelle 1a mit dem Zahnrad 10b der zweiten Ausgleichswelle 1b in Eingriff, so dass die zweite "getriebene" Ausgleichswelle 1b von der ersten Ausgleichswelle 1a angetrieben wird. Diese wird deshalb als getriebene Ausgleichswelle bezeichnet. Beide Zahnräder 10a und 10b auf der jeweiligen Ausgleichswelle 1a und 1b haben Schrägverzahnungen 17, 18 die - bevorzugt wie auch die Verzahnung 16a des Kurbelwellenzahnrads 16 - als Hochverzahnung ausgebildet sind.

Die Ausgleichswellen 1a. 1b, welche im gezeigten Beispiel unterhalb der Kurbelwelle 13 angeordnet sind weisen einen Höhenversatz auf. Das ermöglicht eine platzsparende Räderkette (also eine Räderanordnung mit mehr als zwei Zahnrädern in einer Ebene) bestehend aus den drei Zahnrädern 10a, 10b, 16, wobei das Kurbelwellenzahnrad 16 nur mit dem Zahnrad 10a der treibenden Ausgleichswelle 1a in Verbindung steht, während dieses auch im Eingriff mit dem Zahnrad 10b der Ausgleichswelle 1 b ist. Höhenversetzte Ausgleichswellen werden in einigen Anwendungen neben den Massenkräften gezielt zur zusätzlichen teilweisen Reduzierung des Motorwechselmoments eingesetzt.

Die Zahnräder 10a, 10b werden in einer bevorzugten Ausführungsform durch Wälzfräsen und nachfolgendem Wälzschleifen hergestellt. Auf diese Weise lassen sich die geforderten Genauigkeiten herstellen.

Alternativ können die Verzahnungen der Zahnräder 17, 18 auch durch Wälzfräsen und anschließendem Honen erzeugt werden. Besonders bevorzugt können die Verzahnungen der Zahnräder durch sogenanntes Fertigfräsen hergestellt werden. Dabei wird in einem zusätzlichen Arbeitsgang nach dem Vor- oder Schruppfräsen ein Feinfräsen durchgeführt, so dass sich die geforderte Präzision und hohe Genauigkeit erzielen lässt.

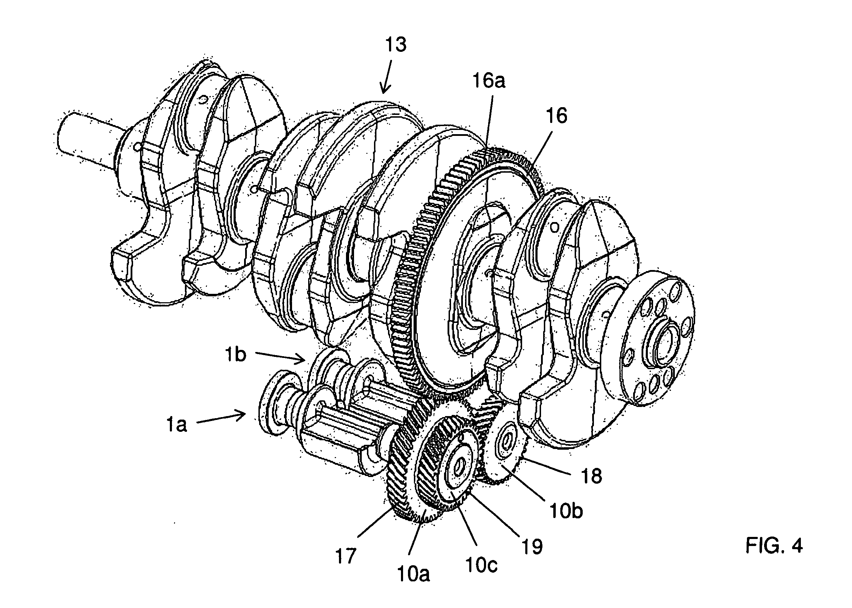

Figur 4 zeigt eine ähnliche Wellenanordnung wie in Figur 2, jedoch mit dem Unterschied, dass die Räderkette - bestehend aus drei Zahnrädern - durch zwei Radpaare 10a, 10b, 10c, 16 ersetzt wird. Das zusätzliche Zahnrad 10c ist ebenso über einen Presssitz auf der treibenden Ausgleichswelle 1a gefügt und greift in das Zahnrad 10b der Ausgleichswelle 1 b ein. Die beiden Zahnräder 10b, 10c werden auch als Synchronstufe bezeichnet. Unter dem Begriff "Synchronstufe" wird eine 1 : 1 übersetzte Verzahnung verstanden.

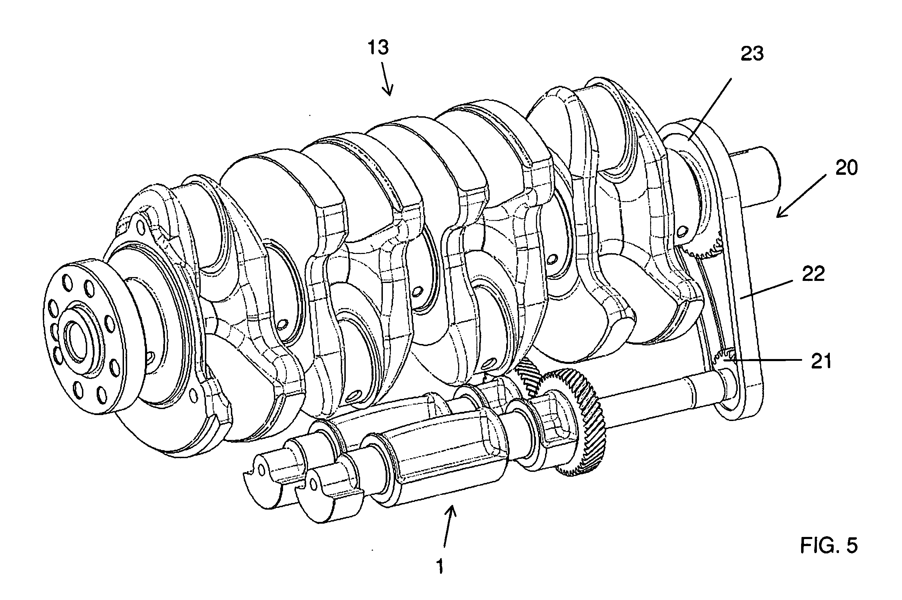

Eine weitere Anwendung der erfindungsgemäßen Ausgleichswelle entsprechend Figur 1 ist in Figur 5 dargestellt. Figur 5 zeigt einen Antrieb von Ausgleichswellen über einen Kettentrieb 20 wie er ebenfalls bei Hubkolbenmotoren Anwendung findet. Ein formschlüssig oder kraftschlüssig mit der Ausgleichswelle 1 verbundenes Kettenrad 21 wird durch eine das Kettenrad 21 umschlingende Kette 22 von einem sich auf der Kurbelwelle 13 angeordneten Kettenrad 23 angetrieben.

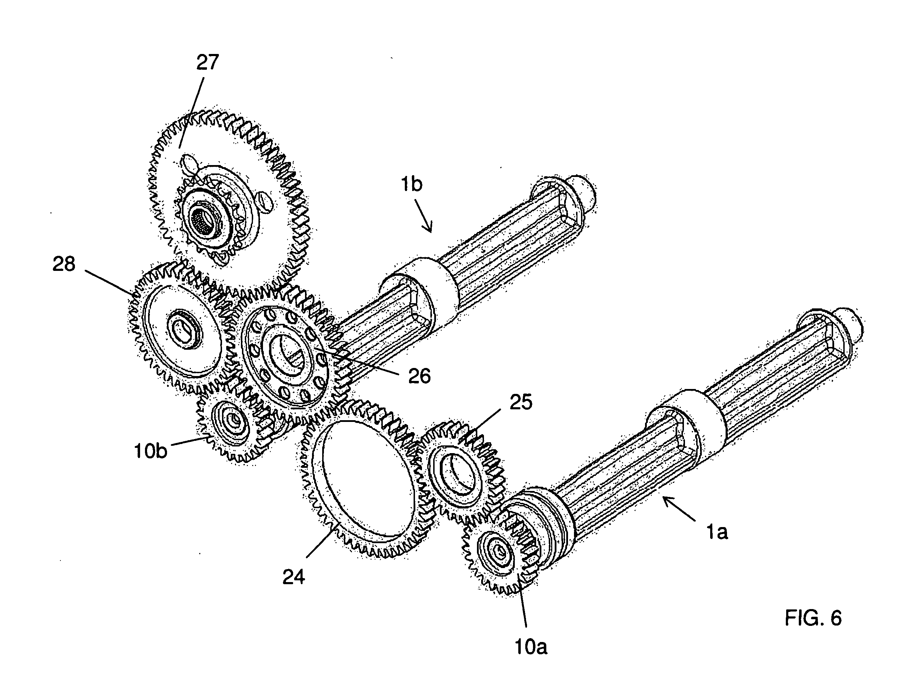

Eine weitere Anwendung erfindungsgemäßer Ausgleichswellen 1a, 1b ist in der Figur 6 verdeutlicht. Figur 6 zeigt den Zahnradantrieb für Nebenaggregate und Nockenwellen eines Hubkolbenmotors. Die Darstellung erfolgt aus Gründen der Übersichtlichkeit teilweise ohne die zugehörigen Wellen. Das Kurbelwellenzahnrad 24 dient als Antriebsrad für ein Zwischenzahnrad 25, das zwischen dem Kurbelwellenzahnrad 24 und dem Zahnrad 10a der Ausgleichswelle 1 a angeordnet ist.

Das Kurbelwellenzahnrad 24 greift weiterhin in ein Zwischenzahnrad 26 ein, das die Zahnräder 27, 28 von (nicht dargestellten) Nebenaggregaten antreibt. Der Antrieb des Zahnrades 10b der zweiten Ausgleichswelle 1b erfolgt ausgehend vom Kurbelwellenrad 24 über die Räderkette der Zahnräder 26, 28.

Der Antrieb von Ausgleichswellen kann also auch über andere Zahnräder erfolgen, die in ein Kurbelwellenzahnrad 16, 24 eingreifen. Die Position eines antreibenden Kurbelwellenzahnrades 16, 24 kann dann je nach Konzept innerhalb eines Rädertriebes für den Antrieb von Nebenaggregaten und Ventiltrieb oder auf einer Kurbelwange 15 angeordnet sein.

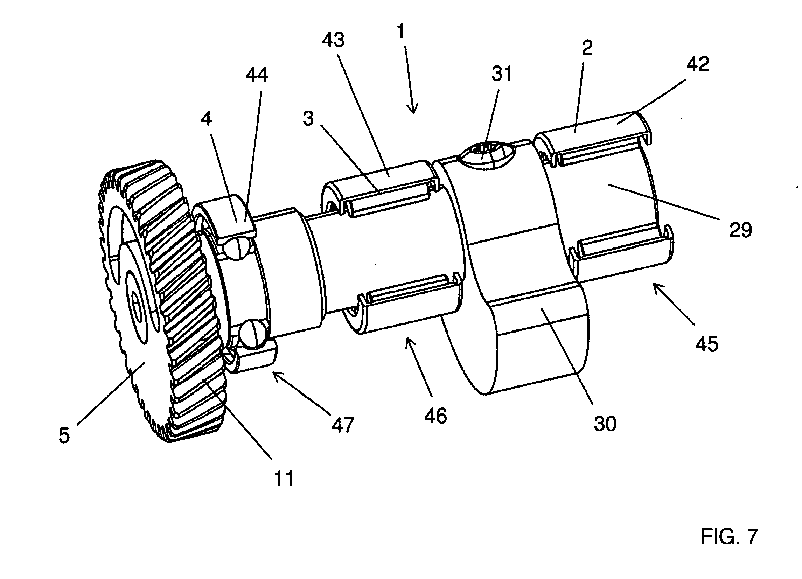

Eine weitere Anwendung der erfindungsgemäßen Ausgleichswelle 1 entsprechend Figur 1 ist in Figur 7 dargestellt. Figur 7 zeigt eine zylindrische Welle 29 gleichen Durchmessers, an der eine Unwucht 30 mittels eines Maschinenelements 31 befestigt ist. Die Ausgleichswelle 1 wird an drei Stellen mittels der Lager 2,3,4 gelagert, die als Wälzlager 42, 43, 44 ausgebildet sind. Die Lager sind teilweise geschnitten dargestellt. Zur Aufnahme der Unwuchtkräfte dienen die beiden Wälzlager 42, 43 beiderseits der Unwucht 30, die als zwei Nadellager 45, 46 ausgebildet sind. Das (bevorzugt ungehärtete) Zahnrad 5 aus Gusseisen mit Kugelgraphit ist über einen Presssitz am vorderen Ende auf der Ausgleichswelle 1 fixiert. Die durch die Schrägverzahnung 11 auftretenden Axialkräfte werden von einem Kugellager 47 des Lagers 4 aufgenommen, welches axial hinter dem Zahnrad 5 montiert ist.

## Patentansprüche

1. Ausgleichswelle (1) für einen Hubkolbenmotor mit einem Zahnrad (5) und mit
- einer Lagerstelle (2), an der die Ausgleichswelle (1) in einem Lager gelagert wird,
- einem Zahnradabschnitt (10), an dem das Zahnrad (5) verdrehsicher mit der Ausgleichswelle befestigt ist,
- einem Unwuchtabschnitt (8), in dem eine Unwucht angeordnet ist,
**dadurch gekennzeichnet, daß** das Zahnrad (5) aus Gusseisen mit Kugelgraphit hergestellt ist, und daß das Zahnrad (5) eine ungehärtete Verzahnung (11) aufweist.

2. Ausgleichswelle nach Anspruch 1, **dadurch gekennzeichnet, dass** das Zahnrad (5) über Presssitz oder andere Welle-Nabe-Verbindungen an der Ausgleichswelle (1) befestigt ist.

3. Ausgleichswelle nach Anspruch 1 oder 2, **dadurch gekennzeichnet, dass** die Ausgleichswelle (1) mit der Lagerstelle (2) über Gleitlagerung oder bevorzugt über Wälzlagerung gelagert ist.

4. Ausgleichswelle nach einem der vorhergehenden Ansprüche, **dadurch gekennzeichnet, dass** die Ausgleichswelle (1) aus Stahl hergestellt ist.

5. Ausgleichswelle nach einem der Ansprüche 1 bis 3, **dadurch gekennzeichnet, dass** die Ausgleichswelle (1) aus dem gleichen Material hergestellt ist wie das Zahnrad (5).

6. Ausgleichswelle nach Anspruch 5, **dadurch gekennzeichnet, dass** die Ausgleichswelle (1) und das Zahnrad (5) einstückig ausgebildet sind.

7. Ausgleichswelle nach Anspruch 5 oder 6, **dadurch gekennzeichnet, dass** die Ausgleichswelle (1) ungehärtet ist.

8. Ausgleichswelle nach einem der vorhergehenden Ansprüche, **dadurch gekennzeichnet, dass** das Zahnrad (5) und/oder die Ausgleichswelle (1) aus Gusseisen besteht, das einen Kohlenstoff-Anteil von 2,9 bis 3,8 Massen-%, bevorzugt von 3,20 bis 3,70 Massen-% und besonders bevorzugt von 3,35 bis 3,65 Massen-% aufweist und/oder einen Silizium-Anteil von 1,5 bis 3,5 Massen%, bevorzugt von 2,2 bis 3,5 Massen-% und besonders bevorzugt von 2,5 bis 3,3 Massen-% hat.

9. Ausgleichswelle nach einem der vorhergehenden Ansprüche, **dadurch gekennzeichnet, dass** das Zahnrad (5) und/oder die Ausgleichswelle (1) aus Gusseisen besteht, das einen Mangan-Anteil von weniger als 0,5 Massen%, bevorzugt von 0,15 bis 0,3 Massen-% hat und/oder einen Phosphor-Anteil von höchstens 0,05 Massen-% bevorzugt höchstens 0,03 Massen-% hat.

10. Ausgleichswelle nach einem der vorhergehenden Ansprüche, **dadurch gekennzeichnet, dass** das Zahnrad (5) und/oder die Ausgleichswelle (1) aus Gusseisen besteht, das einen Kupfer-Anteil von 0,5 bis 1,1 Massen-% aufweist.

11. Ausgleichswelle nach einem der vorhergehenden Ansprüche, **dadurch gekennzeichnet, dass** das Zahnrad (5) und/oder die Ausgleichswelle (1) aus Gusseisen besteht, das ein Mikrogefüge aufweist, das einen Perlit-Anteil von mindestens 60 %, bevorzugt von 80 % bis 90 %, und einen Ferrit-Anteil von höchstens 40 %, bevorzugt von 10 % bis 20 % hat.

12. Ausgleichswelle nach einem der vorhergehenden Ansprüche, **dadurch gekennzeichnet, dass** das Zahnrad (5) und/oder die Ausgleichswelle (1) aus Gusseisen besteht, das Kugelgraphitteilchen einschließt und dessen Gefüge dergestalt ist, dass die größte Abmessung der Kugelgraphitteilchen kleiner 0,12 mm, bevorzugt kleiner 0,08 mm, besonders bevorzugt kleiner 0,06 mm sind.

13. Ausgleichswelle nach einem der vorhergehenden Ansprüche, **dadurch gekennzeichnet, dass** das Zahnrad (5) Verzahnungen (11) aufweist, die als Hochverzahnung ausgebildet sind und einen Fusshöhenfaktor von mindestens 1,25 und einen Kopfhöhenfaktor von mindestens 1,0 aufweisen.

14. Zahnrad für eine Ausgleichswelle (1) eines Hubkolbenmotors, wobei die Ausgleichswelle (1) einen Zahnradabschnitt (10) aufweist, in dem das Zahnrad (5) verdrehsicher mit der Ausgleichswelle (1) befestigt ist, und das Zahnrad (5) aus Gusseisen mit Kugelgraphit mit den chemischen Bestandteilen sowie der Gefügeausbildung nach einem der Ansprüche 9 bis 13 hergestellt ist.

15. Hubkolbenmotor mit einer Kurbelwelle und einer von der Kurbelwelle angetriebenen Ausgleichswelle, insbesondere einer Ausgleichswelle (1) nach Anspruch 1, **dadurch gekennzeichnet, dass** die Ausgleichswelle (1)
- eine Lagerstelle (2), an der die Ausgleichswelle (1) gelagert wird,
- einen Zahnradabschnitt (10), an dem ein Zahnrad (5) verdrehsicher mit der Ausgleichswelle (1) verbunden ist,
- einen Unwuchtabschnitt (8), der eine Unwucht trägt,
einschließt,
wobei das Zahnrad (5) aus Gusseisen mit Kugelgraphit hergestellt ist.

## Claims

1. Balance shaft (1) for a piston engine having a gear (5) and having
- a bearing journal (2) on which the balance shaft (1) is supported in a bearing,
- a gear section (10) on which the gear (5) is fastened in a rotation-locked manner with the balance shaft,
- an unbalanced section (8), in which an unbalanced mass is positioned,
**characterized in that** the gear (5) is produced from nodular cast iron and that the gear (5) comprises an unhardened gearing (11).

2. Balance shaft according to claim 1, **characterized in that** the gear (5) is fastened via a press fit or other shaft-hub-connections on the balance shaft (1).

3. Balance shaft according to claim 1 or 2, **characterized in that** the balance shaft (1) is mounted using the bearing journal (2) via friction bearings or preferably via roller bearings.

4. Balance shaft according to any one of the preceding claims, **characterized in that** the balance shaft (1) is produced from steel.

5. Balance shaft according to any one of claims 1 to 3, **characterized in that** the balance shaft (1) is produced from the same material as the gear (5).

6. Balance shaft according to claim 5, **characterized in that** the balance shaft (1) and the gear (5) are integrally implemented.

7. Balance shaft according to claim 5 or 6, **characterized in that** the balance shaft (1) is unhardened.

8. Balance shaft according to any one of the preceding claims, **characterized in that** the gear (5) and/or the balance shaft (1) comprise cast iron, which has a carbon component of 2,9 to 3,8 mass-%, preferably 3,20 to 3,70 mass-%, and particularly preferably 3,35 to 3,65 mass-%, and/or a silicon component of 1,5 to 3,5 mass-%, preferably 2,2 to 3,5 mass-%, and particularly preferably 2,5 to 3,3 mass-%.

9. Balance shaft according to any one of the preceding claims, **characterized in that** the gear (5) and/or the balance shaft (1) comprise cast iron, which has a manganese component of less than 0,5 mass-%, preferably 0,15 to 0,3 mass-%, and/or a phosphorus component of at most 0,05 mass-%, preferably at most 0,03 mass-%.

10. Balance shaft according to any one of the preceding claims, **characterized in that** the gear (5) and/or the balance shaft (1) comprise cast iron which has a copper component of 0,5 to 1,1 mass-%.

11. Balance shaft according to one of the preceding claims, **characterized in that** the gear (5) and/or the balance shaft (1) comprise cast iron, which has a microstructure which has a perlite component of at least 60%, preferably 80 to 90%, and a ferrite component of at most 40%, preferably 10% to 20%.

12. Balance shaft according to any one of the preceding claims, **characterized in that** the gear (5) and/or the balance shaft (1) comprise cast iron which includes spheroidal graphite particles and whose microstructure is such that the greatest dimension of the spheroidal graphite particles is less than 0,12 mm, preferably less than 0,08 mm, particularly preferably less than 0,06 mm.

13. Balance shaft according to any one of the preceding claims, **characterized in that** the gear (5) has gearings (11) which are implemented as extra depth toothing and have a dedendum factor of at least 1,25 and an addendum factor of at least 1,0.

14. Gear for a balance shaft (1) of a piston engine, the balance shaft (1) having a gear section (10), in which the gear (5) is fastened in a rotation-locked manner with the balance shaft (1), and the gear (5) is produced from nodular cast iron having the chemical components and the microstructure implementation according to any one of claims 9 to 13.

15. Piston engine having a crankshaft and a balance shaft driven by the crankshaft, in particular a balance shaft (1) according to claim 1, **characterized in that** the balance shaft (1) includes
- a bearing journal (2), on which the balance shaft (1) is mounted,
- a gear section (10), on which a gear (5) is connected in a rotation-locked manner to the balance shaft (1),
- an unbalanced section (8), which carries an unbalanced mass,
wherein the gear (5) is produced from nodular cast iron.

## Revendications

1. Arbre d'équilibrage (1) pour un moteur à pistons alternatifs, comprenant une roue dentée (5) et comprenant
- un point de palier (2) au niveau duquel l'arbre d'équilibrage (1) est monté dans un palier,
- une portion pour roue dentée (10) au niveau de laquelle la roue dentée (5) est reliée solidaire en rotation à l'arbre d'équilibrage,
- une portion de déséquilibre (8) dans laquelle est situé un balourd,
**caractérisé en ce que**
la roue dentée (5) est fabriquée en fonte à graphite sphéroïdal et **en ce que** la roue dentée (5) est pourvue d'une denture (11) non trempée.

2. Arbre d'équilibrage selon la revendication 1, **caractérisé en ce que** la roue dentée (5) est fixée sur l'arbre d'équilibrage (1) par ajustage serré ou d'autres liaisons arbre-moyeu.

3. Arbre d'équilibrage selon la revendication 1 ou 2, **caractérisé en ce que** l'arbre d'équilibrage (1) est monté avec le point de palier (2) par le biais d'un palier à glissement ou, de préférence, par le biais d'un palier à roulement.

4. Arbre d'équilibrage selon l'une des revendications précédentes, **caractérisé en ce que** l'arbre d'équilibrage (1) est fabriqué en acier.

5. Arbre d'équilibrage selon l'une des revendications 1 à 3, **caractérisé en ce que** l'arbre d'équilibrage (1) est fabriqué dans le même matériau que la roue dentée (5).

6. Arbre d'équilibrage selon la revendication 5, **caractérisé en ce que** l'arbre d'équilibrage (1) et la roue dentée (5) sont réalisés d'un seul tenant.

7. Arbre d'équilibrage selon la revendication 5 ou 6, **caractérisé en ce que** l'arbre d'équilibrage (1) est non trempé.

8. Arbre d'équilibrage selon l'une des revendications précédentes, **caractérisé en ce que** la roue dentée (5) et/ou l'arbre d'équilibrage (1) est/sont en fonte contenant un pourcentage en masse de carbone compris entre 2,9 et 3,8%, de préférence entre 3,2 et 3,7%, et, plus préférablement, entre 3,35 et 3,65%, et/ou un pourcentage en masse de silicium compris entre 1,5 et 3,5%, de préférence entre 2,2 et 3,5% et, plus préférablement, entre 2,5 et 3,3%.

9. Arbre d'équilibrage selon l'une des revendications précédentes, **caractérisé en ce que** la roue dentée (5) et/ou l'arbre d'équilibrage (1) est/sont en fonte contenant un pourcentage en masse de manganèse inférieur à 0,5%, de préférence compris entre 0,15 et 0,3%, et/ou un pourcentage en masse de phosphore de 0,05% au maximum, de préférence de 0,03% au maximum.

10. Arbre d'équilibrage selon l'une des revendications précédentes, **caractérisé en ce que** la roue dentée (5) et/ou l'arbre d'équilibrage (1) est/sont en fonte contenant un pourcentage en masse de cuivre compris entre 0,5 et 1,1%.

11. Arbre d'équilibrage selon l'une des revendications précédentes, **caractérisé en ce que** la roue dentée (5) et/ou l'arbre d'équilibrage (1) est/sont en fonte présentant une microstructure, qui contient un pourcentage de perlite d'au moins 60%, de préférence compris entre 80% et 90%, et un pourcentage de ferrite de 40% au maximum, de préférence compris entre 10% et 20%.

12. Arbre d'équilibrage selon l'une des revendications précédentes, **caractérisé en ce que** la roue dentée (5) et/ou l'arbre d'équilibrage (1) est/sont en fonte présentant des particules de graphite sphéroïdal et dont la structure est telle que la taille maximale des particules de graphite sphéroïdal est inférieure à 0,12 mm, de préférence inférieure à 0,08 mm, plus préférablement inférieure à 0,06 mm.

13. Arbre d'équilibrage selon l'une des revendications précédentes, **caractérisé en ce que** la roue dentée (5) est pourvue de dentures (11) qui sont réalisées en tant que denture élevée et ont un facteur de creux de référence d'au moins 1,25 et un facteur de saillie des dents d'au moins 1,0.

14. Roue dentée pour un arbre d'équilibrage (1) d'un moteur à pistons alternatifs, l'arbre d'équilibrage (1) comprenant une portion pour roue dentée (10) dans laquelle la roue dentée (5) est reliée solidaire en rotation à l'arbre d'équilibrage (1) et la roue dentée (5) étant fabriquée en fonte à graphite sphéroïdal avec les constituants chimiques et la structure cristalline selon l'une des revendications 9 à 13.

15. Moteur à pistons alternatifs comprenant un arbre à cames et un arbre d'équilibrage entraîné par l'arbre à cames, notamment un arbre d'équilibrage (1) selon la revendication 1, **caractérisé en ce que** l'arbre d'équilibrage (1) comprend
- un point de palier (2) au niveau duquel l'arbre d'équilibrage (1) est monté,
- une portion pour roue dentée (10) au niveau de laquelle une roue dentée (5) est reliée solidaire en rotation à marbre d'équilibrage (1),
- une portion de déséquilibre (8) qui porte un balourd,
la roue dentée (5) étant fabriquée en fonte à graphite sphéroïdal.
